# EUROPEAN PATENT APPLICATION

(11) **EP 4 404 061 A1**
(43) Date of publication of application: **24.07.2024**
(21) Application number: 24152694.6
(22) Date of filing: 18.01.2024
(51) Int. Cl.: G06F 9/50

(54) **DYNAMIC MIGRATION BETWEEN RECEIVE SIDE SCALING (RSS) ENGINE STATES**

(30) Priority: 19.01.2023 US 202318156584
(71) Applicant: VMware LLC, Palo Alto, CA 94304 (US)
(72) Inventor: Sharma, Ankur Kumar, Palo Alto, 94304 (US); Kawale, Akshay Jayant, Palo Alto, 94304 (US); Narayana, Harshaka, Palo Alto, 94304 (US)
(74) Representative: Dilg, Haeusler, Schindelmann Patentanwaltsgesellschaft mbH

(57) **Abstract**

Systems and methods for dynamic migration between Receive Side Scaling (RSS) engine states include monitoring a traffic load of a first shared RSS engine of a physical network interface card (PNIC) of a host machine, the first shared RSS engine being shared among a first plurality of virtual machines (VMs) running on the host machine, determining the traffic load of the first shared RSS engine exceeds a threshold, and, in response to determining that the traffic load of the first shared RSS engine exceeds the threshold, migrating a first VM of the first plurality of VMs to either a dedicated RSS engine of the PNIC or to a second shared RSS engine of the PNIC.

## Description

### Background

Software defined networking (SDN) involves a plurality of hosts in communication over a physical network infrastructure of a data center (e.g., an on-premise data center or a cloud data center). The physical network to which the plurality of physical hosts are connected may be referred to as an underlay network. Each host has one or more virtualized endpoints such as virtual machines (VMs), containers, Docker containers, data compute nodes, isolated user space instances, namespace containers, and/or other virtual computing instances (VCIs), that are connected to, and may communicate over, logical overlay networks. For example, the VMs running on the hosts may communicate with each other using an overlay network established by hosts using a tunneling protocol.

As part of an SDN, any arbitrary set of VMs in a datacenter may be placed in communication across a logical Layer 2 (L2) overlay network by connecting them to a logical switch. A logical switch is an abstraction of a physical switch that is collectively implemented by a set of virtual switches on each host that has a VM connected to the logical switch. The virtual switch on each host operates as a managed edge switch implemented in software by a hypervisor on each host. Virtual switches provide packet forwarding and networking capabilities to VMs running on the host. In particular, each virtual switch uses hardware based switching techniques to connect and transmit data between VMs on a same host, or different hosts.

Each physical host connects to one or more physical networks using one or more physical network interface cards (PNICs) of the host. Further, each VM running on a host has a respective one or more virtual network interface cards (VNICs) that allows the VM to connect to the virtual switch on the host. The virtual switch is further connected to the PNIC(s) of the host. In this context "connect to" refers to the capability of conveying network traffic, such as individual network packets, or packet descriptors, pointers, identifiers, etc., between components so as to effectuate a virtual datapath between software components. Therefore, the VNICs, virtual switches, and PNICs in a data center provide a data path to physical network(s) for packets to and from VMs running on hosts.

A host machine may be configured with receive side scaling (RSS) on one or more of the network interfaces of the host machine, such as at the PNIC(s) and/or VNICs. For example, the host machine may be configured to perform PNIC side RSS at the PNIC(s) and/or VNIC side RSS at the VNIC(s). In RSS, packet processing is distributed among multiple central processing units (CPUs) thereby taking advantage of parallelization to efficiently process packets.

For example, for PNIC side RSS, a PNIC has multiple receive (RX) queues to which packets may be distributed when received at the PNIC from a physical network. The packets may be distributed to different PNIC RX queues based on parameters of the packets in the headers, such as source IP address, destination IP address, source port, destination port, protocol, and/or the like. For example, a hash of the parameters may be taken to, at least in part, determine which PNIC RX queue to place the packet in. The hash may be calculated by the PNIC hardware and the packets distributed to PNIC RX queues by the PNIC hardware itself, thereby not requiring CPU cycles to be used for distributing packets to queues.

Each PNIC RX queue is associated with a kernel thread, which is a thread running on a physical CPU of the host machine, such as a thread of a hypervisor or host operating system (OS). A kernel thread may in part execute functionality of a virtual switch. Different kernel threads may run on different physical CPUs. The kernel thread is configured to, at least in part, process the packet and distribute the packet to a VNIC of a VM to which the packet is addressed, such as to an RX queue of the VNIC. As different kernel threads are running on different physical CPUs, the packets in different PNIC RX queues may be processed by different physical CPUs, thereby achieving processing parallelization across multiple CPUs.

Similarly, a VNIC may have multiple RX queues to which packets may be distributed when received at the VNIC from a virtual switch (e.g., from the PNIC and via the virtual switch). Each of the VNIC RX queues of the VNIC is associated with a VM thread, which is a thread running on a virtual CPU of the VM, such as a thread of a guest operating system of the VM. Different VM threads may run on different virtual CPUs. The VM thread is configured to, at least in part, further handle the packet, such as for an application running on the VM. As different VM threads are running on different virtual CPUs, the packets in different VNIC RX queues may be processed by different virtual CPUs, thereby achieving processing parallelization across multiple CPUs.

On the PNIC side, a PNIC is configured to support a number of RSS engines. An RSS engine is a pool of multiple PNIC RX queues, where each such queue of the RSS engine is associated with a different kernel thread as discussed. Each RSS engine may be understood as a single logical queue, in that there is a single logical queue of packets incoming into the RSS engine, that are actually distributed among the multiple PNIC RX queues of the RSS engine, such as using the hash function discussed.

There are multiple different types of RSS schemes (also referred to as RSS engine states) that can be supported at the host machine. The types of RSS schemes include no hardware RSS, shared RSS, and dedicated RSS, as discussed in further detail herein. A VM may be configured to request a particular RSS scheme, and different VMs on the same host may use different RSS schemes

In an example implementation of no hardware RSS (also referred to as a no RSS engine state), all packets for a VM are distributed by the PNIC to a single PNIC RX queue, such that they are handled by a single kernel thread running on a single physical CPU, meaning there is no parallelization at that stage. Multiple VMs using no RSS may share the single PNIC RX queue, or may have separate such PNIC RX queues. The single kernel thread passes a packet, at least in part, to a single VM thread associated with the VM to which the packet is addressed, such as by placing the packet in the VNIC RX queue associated with the single VM thread, or in another queue. The single VM thread distributes packets to the multiple VNIC RX queues of the VM, such as by hashing the packets as discussed. Therefore, the VM itself performs software based RSS to distribute packets, which uses CPU cycles. The packets are then handled by the multiple VM threads associated with the multiple VNIC RX queues, achieving some parallel processing of the packets.

In an example implementation of dedicated RSS (also referred to as a dedicated RSS engine state), an RSS engine is dedicated for use to a single VM. The RSS engine may include as many PNIC RX queues as the VNIC of the VM has VNIC RX queues. Accordingly, there may be a direct mapping of PNIC RX queues of the RSS engine to VNIC RX queues of the VNIC. Thus, the packets for the VM are distributed to the multiple PNIC RX queues of the RSS engine dedicated to the VM by the PNIC itself, such as using hashing as discussed. Each kernel thread associated with a PNIC RX queue then passes the packet to the VNIC RX queue of the VM associated with that PNIC RX queue, thereby already taking advantage of processing by multiple physical CPUs. Further, the distribution of packets for the VM to the multiple PNIC RX queues, also results in distribution of the packets among the VNIC RX queues, without requiring further distribution on the software side by the VM, thereby saving CPU cycles for processing of packets. The packets are then handled by the multiple VM threads associated with the multiple VNIC RX queues, leading to parallelization across multiple virtual CPUs at the VM.

In an example implementation of shared RSS (also referred to as a shared RSS engine state), an RSS engine is shared by multiple VMs. The RSS engine still includes multiple PNIC RX queues, however, the PNIC RX queues do not necessarily directly map to any particular VNIC RX queues. Accordingly, any packets coming into the RSS engine for the VMs associated with the RSS engine are distributed by the PNIC, such as using hashing, to the multiple PNIC RX queues of the RSS engine, such that there is some parallel processing of packets across physical CPUs. Accordingly, for a packet in a PNIC RX queue of the RSS engine, the associated kernel thread processes the packet and passes it to a VNIC RX queue of the VM to which the packet is addressed. In some cases, there is a mapping of PNIC RX queues to VNIC RX queues, such as one PNIC RX queue may map to different VNIC RX queues of different VMs, and packets addressed to a VM are passed to the VNIC RX queue of the VM mapped to the PNIC RX queue. In some cases, the associated kernel thread passes the packet to a single VM thread of the VM, which then performs software side RSS to distribute packets among the VNIC RX queues as discussed. In some cases, the associated kernel thread performs software side RSS to distribute packets among the VNIC RX queues. Accordingly, shared RSS may result in more parallelization in processing than no hardware RSS, but due to sharing of an RSS engine, may have less efficiency as compared to dedicated RSS.

Though one implementation is discussed where a kernel thread processes and passes packets directly from a PNIC RX queue to a VNIC RX queue, there are other implementations that may similarly be used. For example, there may be a first set of kernel threads at the interface between the PNIC and the hypervisor or OS kernel, wherein each such kernel thread is associated with a PNIC RX queue. Further, there may be a second set of kernel threads at the interface between the VNIC and the kernel, wherein each such kernel thread is associated with a VNIC RX queue. Accordingly, the kernel thread associated with a PNIC RX queue may pass packets to a kernel thread associated with a VNIC RX queue, the kernel thread associated with the VNIC RX queue places the packet in the VNIC RX queue, and then the VM thread associated with the VNIC RX queue processes the packet. The discussions here are applicable to any suitable implementations of the discussed RSS schemes.

It should be noted that the information included in the Background section herein is simply meant to provide a reference for the discussion of certain embodiments in the Detailed Description. None of the information included in this Background should be considered as an admission of prior art.

### Summary

Herein described are one or more embodiments of a method for dynamic migration between RSS engine states including monitoring a traffic load of a first shared RSS engine of a physical network interface card (PNIC) of a host machine, the first shared RSS engine shared among a first plurality of virtual machines (VMs) running on the host machine, determining the traffic load of the first shared RSS engine exceeds a threshold, and, in response to determining the traffic load of the first shared RSS engine exceeds the threshold, migrating a first VM of the first plurality of VMs to either a dedicated RSS engine of the PNIC or to a second shared RSS engine of the PNIC.

Further embodiments include a non-transitory computer-readable storage medium storing instructions that, when executed by a computer system, cause the computer system to perform the method set forth above, and a computer system including at least one processor and memory configured to carry out the method set forth above.

### Brief Description of the Drawings

Figure 1 is a block diagram illustrating different components within a host machine of a datacenter for processing network traffic, according to an example embodiment of the present application.
Figure 2 is a block diagram illustrating a no RSS engine state for a VM, according to an example embodiment of the present application.
Figure 3 is a block diagram illustrating a shared RSS engine state for at least two VMs, according to an example embodiment of the present application.
Figure 4 is a block diagram illustrating a dedicated RSS engine state for a VM, according to an example embodiment of the present application.
Figure 5 is a flowchart illustrating operations for dynamic migration between RSS engine states of one or more VMs, according to an example embodiment of the present application.

### Detailed Description

As discussed, RSS engine states may include a no RSS engine state, a shared RSS engine state, and a dedicated RSS engine state. A PNIC may only be able to support a limited number of RSS engines, e.g., 3 or 4. Further, an RSS engine state of a VM may be statically configured, such as by an administrator. Accordingly, where many VMs run on a host machine, only a limited number of VMs may be able to be configured with a dedicated RSS engine state. Further, the number of VMs that share an RSS engine may also be limited, as the larger the number of VMs that share the RSS engine, the greater the chance for latency in processing the packets of the VMs sharing the RSS engine.

Accordingly, in order for the packet processing for VMs on the host to run efficiently, the administrator may need to carefully select the RSS engine state for each VM on the host. This can be difficult as it may not be known which VMs have more traffic or may need faster packet processing. Further, the traffic of a VM can change over time such that even if the administrator selects RSS engine states for VMs at configuration time and that works well initially, the traffic of the VMs may later change such that the initial configuration is no longer suitable.

Thus, embodiments herein describe techniques for dynamic migration between RSS engine states. In certain aspects, the RSS engine state of a VM is changed based on a traffic load on the VM. For example, lower traffic load VMs may be in a no RSS engine state, while higher traffic load VMs may be in a shared RSS engine state or a dedicated RSS engine state. VMs may be dynamically migrated between the RSS engine states based on a current traffic load of the VM, therefore improving efficient use of PNIC RSS engines. For example, a hypervisor or OS (e.g., kernel of the hypervisor or OS) of the host monitors traffic load on VMs on the host, and dynamically migrates the VMs between RSS engine states. In certain aspects, the host monitors traffic loads by monitoring kernel thread activity (e.g., at a PNIC-kernel interface or at a kernel-VNIC interface), PNIC RX queue usage, VNIC RX queue usage, and/or VM thread activity.

In certain aspects, a VM starts in a no RSS engine state, such as when powered on initially. Further, the hypervisor monitors the traffic load associated with the VM. If the traffic load of the VM exceeds a threshold, the VM may be switched to a shared RSS engine state, or a dedicated RSS engine state, such as by the hypervisor.

In an example, to monitor traffic load, the hypervisor monitors the utilization rate of the VNIC RX queues of the VM. If the utilization rate is above a threshold (e.g., 60%), the VM may be switched to a shared RSS engine state, or a dedicated RSS engine state. In certain aspects, the hypervisor monitors the VNIC RX queues directly. For example, the VNIC RX queues may have a maximum number of packets than can be queued, referred to as the capacity of the VNIC RX queues. The hypervisor determines what percentage of the capacity of the VNIC RX queues is used, and the hypervisor determines whether that percentage exceeds a threshold (e.g., 60%), to determine whether to switch the RSS engine state of the VM. In certain aspects, the hypervisor monitors the VNIC RX queues indirectly. For example, the kernel threads at the kernel-VNIC interface may have a maximum utilization rate, and if the utilization rate is above a threshold (e.g., 60%), the VM may be switched to a shared RSS engine state, or a dedicated RSS engine state.

In certain aspects, after a VM is switched from a no RSS engine state to a shared RSS engine state, the traffic loads of the VMs sharing the RSS engine are monitored. If the traffic load of a VM sharing the RSS engine goes below some threshold, the VM may be switched back to a no RSS engine state. For example, the utilization rate of the VNIC RX queues may be monitored (e.g., directly or indirectly).

If the overall traffic load of VMs sharing the RSS engine goes above some threshold, one or more VMs sharing the RSS engine may be migrated to a dedicated RSS engine state, or to another shared RSS engine. Even migrating to another shared RSS engine may increase efficiency such that no single shared RSS engine is overloaded. For example, the hypervisor monitors the utilization rate of the PNIC RX queues of the shared RSS engine, such as by monitoring the PNIC RX queues directly, similar to how VNIC RX queues are monitored, or by monitoring PNIC-kernel interface kernel threads, similar to how kernel threads at the kernel-VNIC interface are monitored.

In certain aspects, which VM to migrate from the shared RSS engine is decided statically, such as first come first serve, round robin, etc. In certain aspects, which VM to migrate from the shared RSS engine is determined dynamically, such as based on the load of the individual VM. For example, among the VMs sharing the RSS engine, the VM with the highest utilization rate of its VNIC RX queues may be migrated.

In certain aspects, after a VM is switch to a dedicated RSS engine state, the traffic load on the VM is monitored, and if it drops below a threshold, the VM is switched to a shared RSS engine state or a no RSS engine state. For example, the utilization rate of either the VNIC RX queues associated with the VM or the PNIC RX queues associated with the VM/RSS engine may be monitored, as they are logically mapped one-to-one, using the techniques already discussed.

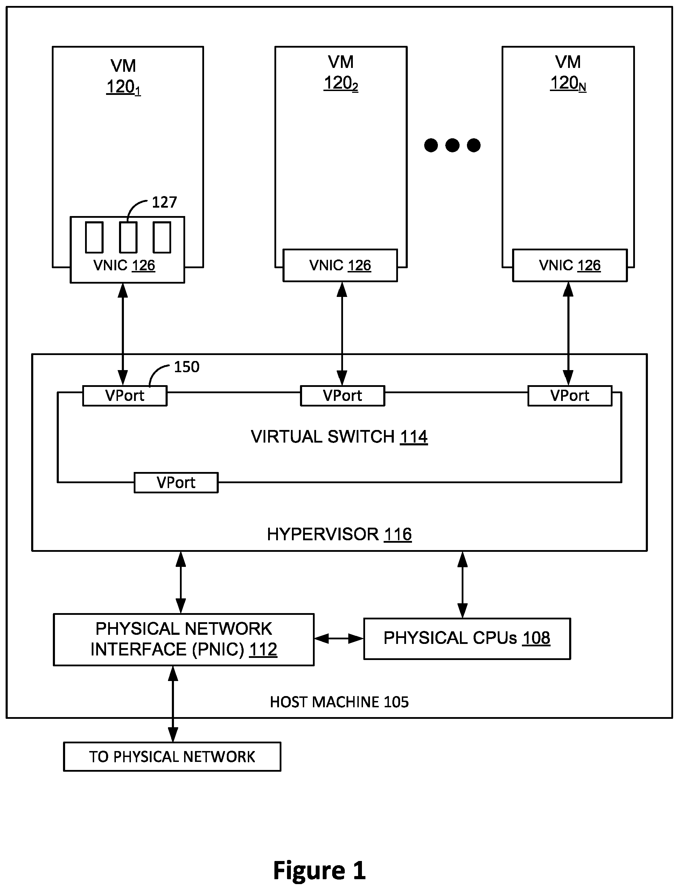

Figure 1 is a block diagram illustrating components within a host machine 105 for processing and routing network traffic, according to an example embodiment of the present application.

Hypervisor 116 serves as an interface between virtual machines 120 and physical network interface card (PNIC) 112, as well as other physical resources (including physical central processing units (CPUs) 108) available on host machine 105. Each VM 120 is shown including a virtual network interface card (VNIC) 126, which is responsible for exchanging packets between VM 120 and hypervisor 116. Though shown as included in VMs 120, it should be understood that VNICs 126 may be implemented by code, such as VM monitor (VMM) code, associated with hypervisor 116. VMM code is part of host code that is provided as part of hypervisor 116, meaning that a VNIC 126 may not be executed by VM 120's code, also referred to as guest code. VNICs 126 may be, in some cases, a software implementation of a physical network interface card. Each VM 120 may be connected to a virtual port (vport) 150 provided by virtual switch 114 through the VM's associated VNIC 126. Virtual switch 114 may serve as a physical network switch, e.g., that serves as an edge device on the physical network, but implemented in software. Virtual switch 114 may be connected to PNIC 112 to allow network traffic to be exchanged between VMs 120 executing on host machine 105 and destinations on an external physical network.

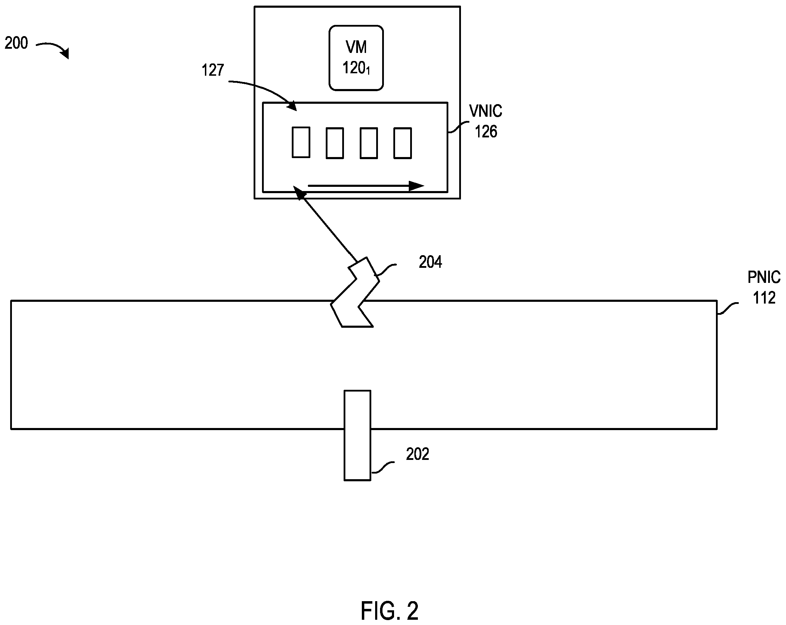

As discussed, in certain embodiments, PNIC 112 (and optionally each VNIC 126) is configured to perform RSS. Accordingly, PNIC 112 is associated with PNIC RX queues, such as PNIC RX queues 202 (FIGs. 2-4). Each PNIC RX queue 202 represents a memory space and may be associated with a kernel thread running on a different one physical CPU/processing core of a plurality of physical CPU cores 108 of the host 105. Further, each VNIC 126 is associated with a plurality of VNIC RX queues 127. Each of the VNIC RX queues 127 represents a memory space and may be associated with a VM thread running on a different one virtual CPU of a plurality of virtual CPUs. A virtual CPU, in some embodiments, corresponds to different resources (e.g., physical CPU 108 or execution core, time slots, compute cycles, etc.) of one or more physical CPUs 108 of host machine 105.

A packet may be received at virtual switch 114 of host machine 105 via PNIC 112. Virtual switch 114 sends the packet to VNIC 126 of one or more VMs 120. In certain aspects, kernel threads discussed herein for passing packets between PNIC 112 and VNICs 126 may execute functionality of virtual switch 114.

Referring again to Figure 1, a site includes host(s) 105. The site may include additional components, such as a management and control cluster, a management network, a data network, a distributed data storage, etc., that are not shown in the figure for simplicity of description. The management and data networks may each provide Layer 2 or Layer 3 connectivity, for example, in accordance with the Open Systems Interconnection (OSI) model, with internal physical and/or software defined switches and routers (not shown in the figure). Hosts 105 may communicate with each other, with management and control clusters, or with other external network devices via the management and data networks.

Each of hosts 105 may be constructed on a server grade hardware platform, such as an x86 architecture platform. For example, hosts 105 may be geographically co-located servers on the same rack. It should be noted that the site may also include multiple hosts and similar components as a first site, which are not shown in the figure for simplicity of description.

The hardware platform of each host 105 includes components of a computing device, such as one or more central processing units (CPUs) 108, a system memory, a network interface 112, a storage system, and other I/O devices, such as, for example, USB interfaces (not shown). The network interface 112 enables host 105 to communicate with other devices via a communication medium. The network interface 112 may include one or more network adapters, which may also be referred to as network interface cards (NICs) such as PNIC 112. Hosts 105 may be connected to each of the data network and management network via one or more PNICs 112.

Host 105 may be configured to provide a virtualization layer, also referred to as a hypervisor 116, that abstracts processor, memory, storage, and networking resources of hardware platform into multiple virtual machines 120₁ to 120_{N} (collectively referred to as VMs 120 and individually referred to as VM 120) that run concurrently on the same host. Hypervisor 116 may run on top of the operating system in host 105. In some embodiments, hypervisor 116 can be installed as system level software directly on the hardware platform of host 105 (often referred to as "bare metal" installation) and be conceptually interposed between the physical hardware and the guest operating systems executing in the virtual machines.

In some implementations, hypervisor 116 may comprise system level software as well as a "Domain 0" or "Root Partition" virtual machine (not shown) which is a privileged virtual machine that has access to the physical hardware resources of the host and interfaces directly with physical I/O devices using device drivers that reside in the privileged virtual machine. Although the disclosure is described with reference to VMs, the teachings herein also may apply to other types of VCIs.

Figure 2 depicts an example no RSS engine state 200 for a VM 120₁. The PNIC 112 is shown. Packets received for VM 120₁ at PNIC 112 are shown as being inserted into a single PNIC RX queue 202, as there is no hardware RSS occurring at PNIC 112. The single PNIC RX queue 202 is associated with a single kernel thread 204 (PNIC-kernel interface kernel thread) that processes all packets in the PNIC RX queue 202, as discussed. Further, as discussed the single kernel thread 204 processes and passes the packets in PNIC RX queue 202 addressed to VM 120₁ to a single VM thread of VM 120₁. For example, the single kernel thread 204 inserts the packets in a single VNIC RX queue 127 of VM 120₁ that is associated with the VM thread. The single kernel thread 204 passes the packets to the single VM thread directly or via another kernel thread (kernel-VNIC interface kernel thread) associated with the single VM thread/VNIC RX queue 127. The single VM thread then distributes packets across the multiple VNIC RX queues 127 of VM 120₁ as discussed.

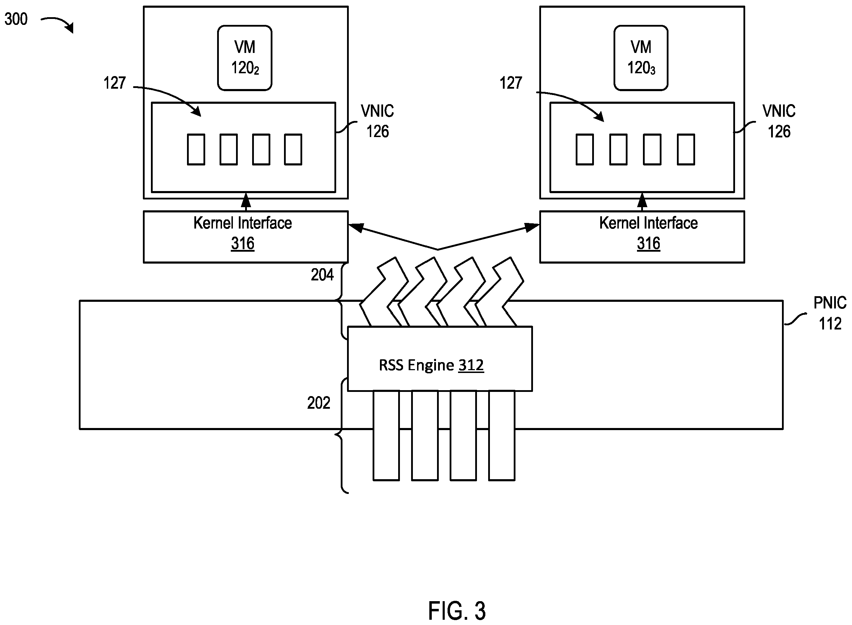

Figure 3 depicts an example shared RSS engine state 300 for at least two VMs 120₂ and 120₃. As shown, PNIC 112 implements a shared RSS engine 312 having multiple PNIC RX queues 202. The shared RSS engine 312 is shared between VM 120₂ and VM 120₃. Each PNIC RX queue 202 is associated with a different kernel thread 204, as discussed. Further, PNIC 112 is configured to perform RSS and distribute packets for VM 120₂ and VM 120₃ among PNIC RX queues 202, such as by hashing, as discussed. Further, each kernel thread 204 processes and passes each packet in its associated PNIC RX queue 202 to the VNIC 126 of the VM to which the packet is addressed, according to the techniques discussed. For example, the kernel thread 204 may pass the packet directly to a VNIC RX queue 127 of the VM, or to another kernel thread (kernel-VNIC interface 316 kernel thread) associated with a VNIC RX queue 127 of the VM.

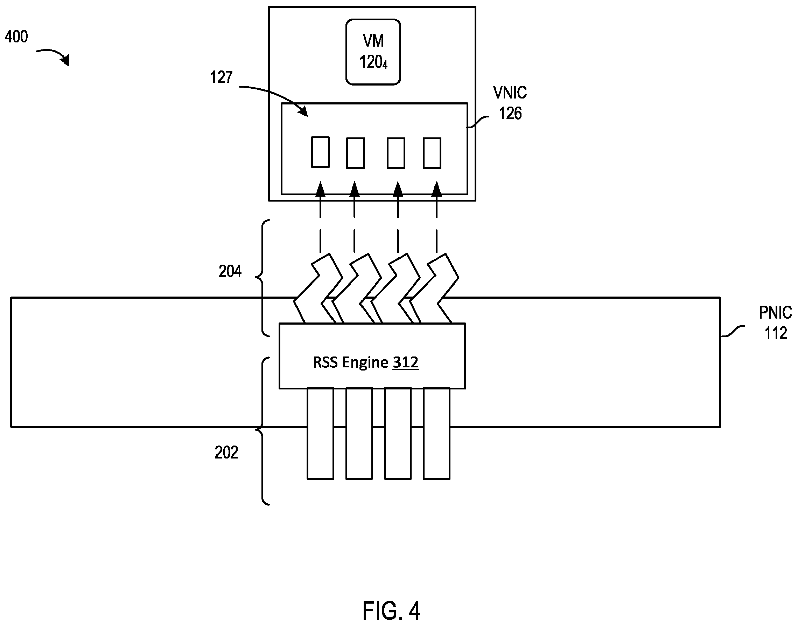

Figure 4 depicts an example dedicated RSS engine state 400 for a VM 120₄. As shown, PNIC 112 implements a dedicated RSS engine 312 having multiple PNIC RX queues 202. The dedicated RSS engine 312 is dedicated to VM 120₄. Each PNIC RX queue 202 is associated with a different kernel thread 204, as discussed. Further, PNIC 112 is configured to perform RSS and distribute packets for VM 120₄ among PNIC RX queues 202, such as by hashing, as discussed. Further, each kernel thread 204 processes and passes each packet in its associated PNIC RX queue 202 to a respective VNIC RX queue 127 of VM 120₄, according to the techniques discussed.

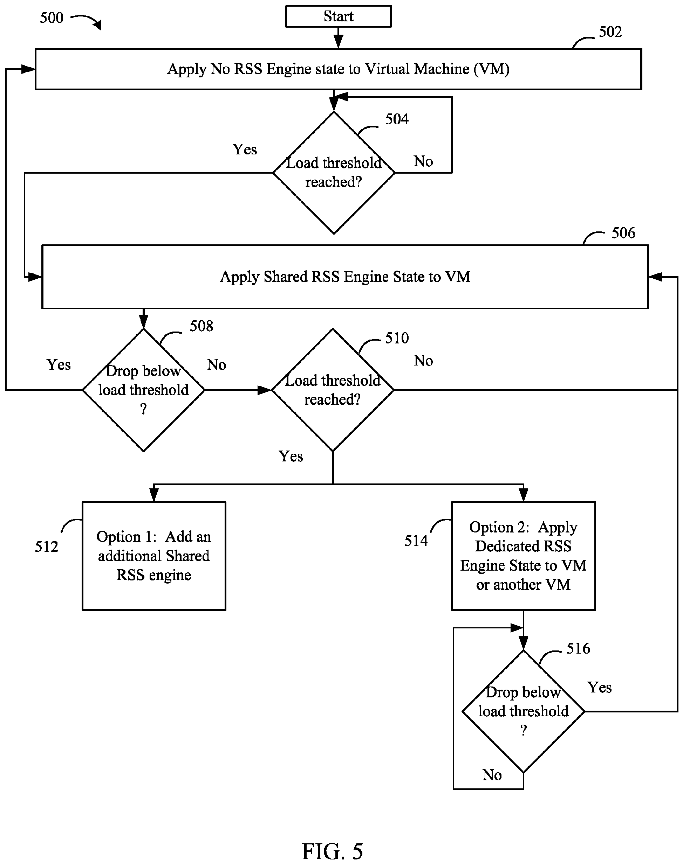

Figure 5 depicts example operations 500 for dynamic migration between RSS engine states. At block 502, VM 120 is started in a no RSS engine state. For example, VM 120 may be initially powered on by the hypervisor and accordingly be assigned a no RSS engine state by the hypervisor.

At block 504, the kernel determines whether a traffic load of the VM 120 exceeds a load threshold. For example, the kernel monitors traffic load of the VM 120 as discussed (e.g., utilization rate of VNIC RX queues 127 of the VM 120). If the traffic load of the VM 120 does not exceed the threshold, operations 500 return to block 504 to continue to monitor the traffic load of the VM 120. If the traffic load of the VM 120 does exceed the threshold, operations 500 continue to block 506, where the VM is migrated to a shared RSS engine state. In embodiments, the threshold may be 60%, or in a range of from about 40% to 70%.

At block 508, the kernel determines whether a traffic load of the VM 120 drops below a threshold (e.g., the same as the threshold of block 504, or another threshold). For example, the kernel monitors a utilization rate of VNIC RX queues 127 of the VM 120. If the traffic load of the VM 120 does drop below the threshold, operations 500 return to block 502, where the VM 120 is migrated to a no RSS engine state. If the traffic load of the VM 120 does not drop below the threshold, operations 500 continue to block 510.

At block 510, the kernel determines whether a traffic load of the shared RSS engine (used by the VM) as a whole exceeds a threshold (e.g., the same as the threshold of block 504 or 508, or another threshold). For example, the kernel monitors a utilization rate of PNIC RX queues 202 of the shared RSS engine 312. If the traffic load of the shared RSS engine 312 does not exceed the threshold, operations 500 return to block 506, where the VMs 120 associated with the RSS engine 312 remain associated with the RSS engine 312. If the traffic load of the shared RSS engine 312 does exceed the threshold, operations 500 continue to block 512 (as one option) or block 514 (as another option).

At block 512, one or more VMs associated with the shared RSS engine 312 for which the traffic load exceeds the threshold are migrated to another shared RSS engine (e.g., which may be newly created). For example, the one or more VM to be migrated may be selected statically or dynamically as discussed among the VMs associated with the shared RSS engine 312. The operations may then return to block 506 to monitor the load of each of the shared RSS engines.

At block 514, one or more VMs associated with the shared RSS engine 312 for which the traffic load exceeds the threshold are migrated to a dedicated RSS engine state. For example, the one or more VM to be migrated may be selected statically or dynamically as discussed among the VMs associated with the shared RSS engine 312.

Continuing, at block 516, for a VM migrated to the dedicated RSS engine state, it is determined if a traffic load of the VM drops below a threshold (e.g., the same as the threshold of block 504, 508, or 510, or another threshold). For example, the kernel monitors a utilization rate of VNIC RX queues 127 of the VM 120 and/or PNIC RX queues 202 of the dedicated RSS engine. If the traffic load of the VM 120 does drop below the threshold, operations 500 return to block 506, where the VM 120 is migrated to a shared RSS engine state. If the traffic load of the VM 120 does not drop below the threshold, operations 500 return to block 516 to continue monitoring the traffic load of the VM.

In host machine 105, with reference to Figure 1, processing unit(s) may retrieve instructions to execute and data to process in order to execute the processes discussed herein. The processing unit(s) may be a single processor or a multi-core processor in different embodiments. The read-only-memory (ROM) may store static data and instructions that may be utilized by the processing unit(s) and other modules of the electronic system. The permanent storage device, on the other hand, may be a read-and-write memory device. The permanent storage device may be a non-volatile memory unit that stores instructions and data even when the host machine is off. Some embodiments use a mass-storage device (such as a magnetic or optical disk and its corresponding disk drive) as the permanent storage device.

Some embodiments use a removable storage device (such as a flash drive, etc.) as the permanent storage device. Like permanent storage device, the system memory may be a read-and-write memory device. However, unlike permanent storage device, the system memory may be a volatile read-and-write memory, such as a random access memory (RAM). The system memory may store some of the instructions and data that processing unit(s) utilize at runtime. In some embodiments, processes discussed herein are stored in the system memory, the permanent storage device, and/or the read-only memory.

Certain embodiments as described above involve a hardware abstraction layer on top of a host computer. The hardware abstraction layer allows multiple contexts or virtual computing instances to share the hardware resource. In some embodiments, these virtual computing instances are isolated from each other, each having at least a user application running therein. The hardware abstraction layer thus provides benefits of resource isolation and allocation among the virtual computing instances. In the foregoing embodiments, virtual machines are used as an example for the virtual computing instances and hypervisors as an example for the hardware abstraction layer. As described above, each virtual machine includes a guest operating system in which at least one application runs.

It should be noted that these embodiments may also apply to other examples of virtual computing instances, such as containers not including a guest operating system, referred to herein as "OS-less containers". OS-less containers implement operating system-level virtualization, wherein an abstraction layer is provided on top of the kernel of an operating system on a host computer. The abstraction layer supports multiple OS-less containers each including an application and its dependencies. Each OS-less container runs as an isolated process in user space on the host operating system and shares the kernel with other containers. The OS-less container relies on the kernel's functionality to make use of resource isolation (CPU, memory, block I/O, network, etc.) and separate namespaces and to completely isolate the application's view of the operating environments. By using OS-less containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O.

The various embodiments described herein may employ various computer-implemented operations involving data stored in computer systems. For example, these operations may require physical manipulation of physical quantities-usually, though not necessarily, these quantities may take the form of electrical or magnetic signals, where they or representations of them are capable of being stored, transferred, combined, compared, or otherwise manipulated. Further, such manipulations are often referred to in terms, such as producing, identifying, determining, or comparing. Any operations described herein that form part of one or more embodiments of the disclosure may be useful machine operations. In addition, one or more embodiments of the disclosure also relate to a device or an apparatus for performing these operations. The apparatus may be specially constructed for specific required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The various embodiments described herein may be practiced with other computer system configurations including hand-held devices, microprocessor systems, microprocessor-based or programmable consumer electronics, minicomputers, mainframe computers, and the like.

One or more embodiments of the present disclosure may be implemented as one or more computer programs or as one or more computer program modules embodied in one or more computer readable media. The term computer readable medium refers to any data storage device that can store data which can thereafter be input to a computer system-computer readable media may be based on any existing or subsequently developed technology for embodying computer programs in a manner that enables them to be read by a computer. Examples of a computer readable medium include a hard drive, network attached storage (NAS), read-only memory, random-access memory (e.g., a flash memory device), a CD (Compact Discs) --CD-ROM, a CD-R, or a CD-RW, a DVD (Digital Versatile Disc), a magnetic tape, and other optical and non-optical data storage devices. The computer readable medium can also be distributed over a network coupled computer system so that the computer readable code is stored and executed in a distributed fashion.

Although one or more embodiments of the present disclosure have been described in some detail for clarity of understanding, it will be apparent that certain changes and modifications may be made within the scope of the claims. Accordingly, the described embodiments are to be considered as illustrative and not restrictive, and the scope of the claims is not to be limited to details given herein, but may be modified within the scope and equivalents of the claims. In the claims, elements and/or steps do not imply any particular order of operation, unless explicitly stated in the claims.

Virtualization systems in accordance with the various embodiments may be implemented as hosted embodiments, non-hosted embodiments or as embodiments that tend to blur distinctions between the two, are all envisioned. Furthermore, various virtualization operations may be wholly or partially implemented in hardware. For example, a hardware implementation may employ a look-up table for modification of storage access requests to secure non-disk data.

Many variations, modifications, additions, and improvements are possible, regardless the degree of virtualization. The virtualization software can therefore include components of a host, console, or guest operating system that performs virtualization functions. Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the disclosure(s). In general, structures and functionality presented as separate components in exemplary configurations may be implemented as a combined structure or component. Similarly, structures and functionality presented as a single component may be implemented as separate components. These and other variations, modifications, additions, and improvements may fall within the scope of the appended claim(s).

## Claims

1. A method for dynamic migration between Receive Side Scaling, RSS, engine states, the method comprising:
monitoring a traffic load of a first shared RSS engine of a physical network interface card, PNIC, of a host machine, the first shared RSS engine being shared among a first plurality of virtual machines, VMs, running on the host machine;
determining the traffic load of the first shared RSS engine exceeds a threshold; and
in response to determining that the traffic load of the first shared RSS engine exceeds the threshold, migrating a first VM of the first plurality of VMs to either a dedicated RSS engine of the PNIC or to a second shared RSS engine of the PNIC.

2. The method of claim 1, further comprising:
determining a traffic load of a second VM of the first plurality of VMs drops below a second threshold; and
in response to determining that the traffic load of the second VM of the first plurality of VMs drops below the second threshold, migrating the second VM to a no RSS engine state.

3. The method of claim 1 or 2, further comprising, in response to determining that the traffic load of the first shared RSS engine exceeds the threshold:
selecting the first VM for migration based on a traffic load of the first VM.

4. The method of any one of the claims 1 to 3, further comprising, in response to determining that the traffic load of the first shared RSS engine exceeds the threshold:
selecting the first VM for migration based on a static criteria.

5. The method of any one of the claims 1 to 4, further comprising:
determining a traffic load of a second VM exceeds a second threshold; and
in response to determining that the traffic load of the second VM exceeds the second threshold, migrating the second VM to use the shared RSS engine.

6. The method of any one of the claims 1 to 5, wherein
monitoring the traffic load of the first shared RSS engine comprises monitoring a traffic load of a plurality of PNIC receive queues of the first shared RSS engine.

7. The method of claim 6, wherein
monitoring the traffic load of the plurality of PNIC receive queues of the first shared RSS engine comprises monitoring utilization of a plurality of kernel threads associated with the plurality of PNIC receive queues.

8. A computer system, the computer system comprising:
a memory; and
at least one processor communicatively coupled to the memory, the at least one processor being configured to:
monitor a traffic load of a first shared RSS engine of a physical network interface card, PNIC, of a host machine, the first shared RSS engine being shared among a first plurality of virtual machines, VMs, running on the host machine;
determine the traffic load of the first shared RSS engine exceeds a threshold; and
in response to determining that the traffic load of the first shared RSS engine exceeds the threshold, migrate a first VM of the first plurality of VMs to either a dedicated RSS engine of the PNIC or to a second shared RSS engine of the PNIC.

9. The computer system of claim 8, wherein the at least one processor is further configured to:
determine a traffic load of a second VM of the first plurality of VMs drops below a second threshold; and
in response to determining that the traffic load of the second VM of the first plurality of VMs drops below the second threshold, migrate the second VM to a no RSS engine state.

10. The computer system of claim 8 or 9, wherein
the at least one processor is further configured to, in response to determining that the traffic load of the first shared RSS engine exceeds the threshold:
select the first VM for migration based on a traffic load of the first VM and/or based on static criteria.

11. The computer system of any one of the claims 8 to 10, wherein
the at least one processor is further configured to:
determine a traffic load of a second VM exceeds a second threshold; and
in response to determining the traffic load of the second VM exceeds the second threshold, migrate the second VM to use the shared RSS engine;
and/or wherein
to monitor the traffic load of the first shared RSS engine comprises to monitor a traffic load of a plurality of PNIC receive queues of the first shared RSS engine.

12. A non-transitory computer readable medium comprising instructions that, when executed by one or more processors of a computing system, cause the computing system to perform operations for dynamic migration between Receive Side Scaling, RSS, engine states, the operations comprising:
monitoring a traffic load of a first shared RSS engine of a physical network interface card, PNIC, of a host machine, the first shared RSS engine being shared among a first plurality of virtual machines, VMs, running on the host machine;
determining the traffic load of the first shared RSS engine exceeds a threshold; and
in response to determining that the traffic load of the first shared RSS engine exceeds the threshold, migrating a first VM of the first plurality of VMs to either a dedicated RSS engine of the PNIC or to a second shared RSS engine of the PNIC.

13. The non-transitory computer readable medium of claim 12, wherein the operations further comprise:
determining a traffic load of a second VM of the first plurality of VMs drops below a second threshold; and
in response to determining that the traffic load of the second VM of the first plurality of VMs drops below the second threshold, migrating the second VM to a no RSS engine state.

14. The non-transitory computer readable medium of claim 12 or 13, wherein
the operations further comprise, in response to determining that the traffic load of the first shared RSS engine exceeds the threshold:
selecting the first VM for migration based on a traffic load of the first VM and/or based on a static criteria.
and/or wherein
the operations further comprise:
determining a traffic load of a second VM exceeds a second threshold; and
in response to determining that the traffic load of the second VM exceeds the second threshold, migrating the second VM to use the shared RSS engine.

15. The non-transitory computer readable medium of any one of the claims 12 to 14, wherein monitoring the traffic load of the first shared RSS engine comprises monitoring a traffic load of a plurality of PNIC receive queues of the first shared RSS engine;
wherein in particular
monitoring the traffic load of the plurality of PNIC receive queues of the first shared RSS engine comprises monitoring utilization of a plurality of kernel threads associated with the plurality of PNIC receive queues.
